# FASCICULE DE BREVET EUROPEEN

(11) **EP 2 867 543 B1**
(45) Date de publication et mention de la délivrance du brevet: **08.08.2018**
(21) Numéro de dépôt: 13744639.9
(22) Date de dépôt: 26.06.2013
(51) Int. Cl.: F16B 13/00, F16B 13/06, F16B 13/12

(54) **CHEVILLE POUR FIXATION DANS UNE PAROI**
ANKER ZUR BEFESTIGUNG IN EINER WAND
ANCHOR FOR ATTACHMENT IN A WALL

(30) Priorité: 28.06.2012 FR 1256151
(43) Date de publication de la demande: 06.05.2015
(73) Titulaire: Saint-Gobain Placo, 92150 Suresnes (FR)
(72) Inventeur: VIVIER, Guillaume, F-92200 Bagneux (FR); OBAME OBAME, Hugues, F-60180 Nogent Sur Oise (FR)
(74) Mandataire: Saint-Gobain Recherche
(86) Numéro de dépôt international: PCT/FR2013/051495
(87) Numéro de publication internationale: WO 2014/001720

(56) Documents cités:
- EP-A2- 0 859 157
- WO-A2-2004/053341
- CA-A1- 2 080 065
- FR-A1- 2 640 704
- US-A- 3 381 566
- US-A- 3 385 156

## Description

La présente invention a trait à une cheville pour la fixation dans une paroi, ainsi qu'à un procédé de fabrication d'une telle cheville. Une cheville selon le préambule de la revendication 1 est connue du document FR 2 640 704 A.

Il est connu de fixer une pièce sur une paroi d'épaisseur relativement faible, telle qu'une plaque de plâtre, à l'aide d'une cheville à expansion. US-A-3 316 796 décrit une cheville à expansion classique comprenant une vis reçue dans un corps de cheville, où le corps de cheville est muni d'une collerette à son extrémité dirigée vers la tête de vis et, à l'opposé de la tête de vis, d'une partie taraudée qui coopère avec le filet de la vis. Pour fixer une pièce sur une paroi avec une telle cheville, plusieurs étapes sont nécessaires. Tout d'abord, on perce un trou dans la paroi, et on y insère le corps de cheville jusqu'à la venue en appui de la collerette contre la paroi. On visse alors la vis dans la partie taraudée, ce qui provoque l'avancée de la partie taraudée vers la tête de vis et l'expansion du corps de cheville à l'arrière de la paroi. Le corps de cheville est ainsi immobilisé dans la paroi. On dévisse ensuite la vis, et on place la pièce à fixer contre la collerette du corps de cheville. Enfin, on introduit à nouveau la vis dans le corps de cheville à travers la pièce, et on l'y visse pour fixer la pièce.

La mise en oeuvre de ces étapes successives est longue et fastidieuse. De plus, l'installation de la cheville nécessite plusieurs outils, en particulier un embout de perçage de dimensions adaptées à celles du corps de cheville afin d'éviter toute détérioration de la paroi lors de l'insertion de la cheville.

C'est à ces inconvénients qu'entend plus particulièrement remédier l'invention en proposant une cheville autoforeuse permettant de fixer une pièce sur une paroi de manière simple et rapide, la fixation de la pièce pouvant être réalisée en une seule étape et à l'aide d'un outil de vissage classique.

A cet effet, l'invention a pour objet une cheville autoforeuse selon la revendication 1.

Une telle cheville autoforeuse permet de fixer une pièce sur une paroi en une seule étape, en entraînant la vis en rotation à l'aide d'un outil de vissage classique, notamment une visseuse électrique. Dans un premier temps, tant que le couple appliqué entre la vis et le corps de cheville reste inférieur au couple prédéterminé, la vis et le corps de cheville sont liés cinématiquement l'un à l'autre grâce aux moyens de solidarisation. En entraînant la vis en rotation, on obtient alors une rotation de l'élément de perçage et, en mettant en contact l'élément de perçage avec la paroi, on perce un trou dans la paroi tout en y insérant le corps de cheville. On comprend ainsi que le couple de solidarisation entre la vis et le corps de cheville doit être supérieur au couple nécessaire pour percer la paroi. Le corps de cheville est immobilisé dans le trou de la paroi par les moyens de blocage en rotation, avec sa collerette en appui contre la paroi ou contre une pièce à fixer sur la paroi. La vis et le corps de cheville restent solidaires jusqu'à ce qu'un couple supérieur ou égal au couple prédéterminé soit atteint. En continuant d'augmenter le couple sur la vis, celle-ci se désolidarise du corps de cheville, ce qui provoque le vissage de la vis dans la partie taraudée du corps de cheville et l'avancée de la partie taraudée en direction de la collerette. Il en résulte une déformation de la partie d'expansion, ce qui verrouille le corps de cheville dans le trou de la paroi.

De manière avantageuse, l'élément de perçage comporte un alésage interne adapté pour le libre passage de la tige de la vis. L'élément de perçage, qui est solidaire de la partie taraudée, peut ainsi avancer avec celle-ci en direction de la collerette lors du vissage de la vis dans la partie taraudée. Il en résulte un encombrement réduit du corps de cheville à l'arrière de la paroi en configuration montée.

Le couple prédéterminé, au-delà duquel la vis et le corps de cheville sont désolidarisés l'un de l'autre, est ajusté en fonction des propriétés mécaniques de la paroi et des éléments constitutifs du corps de cheville. En particulier, le couple prédéterminé doit être supérieur au couple nécessaire pour le perçage de la paroi, et inférieur au couple au-delà duquel les moyens de blocage en rotation du corps de cheville ne jouent plus leur rôle.

Dans le cadre de l'invention, les moyens de solidarisation détachables sont actifs entre la vis et le corps de cheville indépendamment d'un effort de contact entre la tête de la vis et la collerette du corps de cheville. En particulier, il peut exister un espace entre la tête de la vis et la collerette du corps de cheville lors du perçage de la paroi. La présence de tels moyens de solidarisation actifs indépendamment d'un effort de contact entre la tête de la vis et la collerette du corps de cheville est particulièrement avantageuse lorsque le couple à appliquer pour obtenir la déformation de la partie d'expansion est inférieur au couple de perçage. Selon l'invention, les moyens de solidarisation détachables assurent une solidarisation entre la tige de la vis et le corps de cheville.

Selon d'autres caractéristiques avantageuses d'une cheville conforme à l'invention, prises isolément ou selon toutes les combinaisons techniquement possibles :
- l'élément de perçage comporte, à son extrémité opposée à la collerette, une pluralité de dents réparties circonférentiellement autour de l'alésage ; en particulier, l'élément de perçage peut être une scie cloche ;
- l'extrémité de la tige de la vis opposée à la tête forme un pointeau de centrage pour l'élément de perçage ;
- les dimensions radiales de l'élément de perçage sont supérieures ou égales aux dimensions radiales de la partie taraudée et de la partie d'expansion à l'état non déformé, et sont strictement inférieures aux dimensions radiales de la collerette ;
- la partie d'expansion est en matériau plastique ;
- l'élément de perçage est en matériau métallique ;
- la partie taraudée est en matériau métallique ;
- la partie taraudée et l'élément de perçage sont une seule pièce métallique ;
- le corps de cheville est obtenu par moulage par injection d'un matériau plastique autour de la ou chaque pièce métallique formée par la partie taraudée et/ou l'élément de perçage ;
- la partie d'expansion, la partie taraudée et l'élément de perçage sont en matériau plastique ;
- la partie taraudée et l'élément de perçage sont constitués en matériau plastique plus rigide que le matériau plastique de la partie d'expansion ;
- le corps de cheville est obtenu par moulage par injection en une seule pièce ;
- les moyens de solidarisation détachables comprennent une couche d'adhésif entre la vis et le corps de cheville, qui est adaptée pour rompre lors du dépassement du couple prédéterminé ;
- les moyens de solidarisation détachables comprennent une liaison sécable entre la vis et le corps de cheville, qui est adaptée pour rompre lors du dépassement du couple prédéterminé ;
- les moyens de solidarisation détachables comprennent une liaison de précontrainte entre la vis et le corps de cheville, qui est adaptée pour rompre lors du dépassement du couple prédéterminé ;
- les moyens de blocage en rotation du corps de cheville par rapport à la paroi comprennent au moins une ailette d'ancrage dans la paroi au voisinage de la collerette ;
- la partie d'expansion comporte une pluralité de fentes longitudinales, qui sont réparties circonférentiellement en étant inclinées par rapport à un axe longitudinal de la partie d'expansion et qui définissent une pluralité de bandes déformable hélicoïdalement lors du vissage de la vis dans la partie taraudée.

L'invention a également pour objet un procédé de fabrication d'une cheville telle que décrite ci-dessus dont la partie taraudée et/ou l'élément de perçage est en matériau métallique, dans lequel on place la ou chaque pièce métallique formée par la partie taraudée et/ou l'élément de perçage dans un moule, et on injecte un matériau plastique dans le moule autour de la ou chaque pièce métallique.

L'invention a également pour objet un procédé de fabrication d'une cheville telle que décrite ci-dessus dont la partie d'expansion, la partie taraudée et l'élément de perçage sont en matériau plastique, par injection d'un matériau plastique ou de plusieurs matériaux plastiques compatibles dans un moule.

Un autre objet de l'invention est l'utilisation d'une cheville telle que décrite ci-dessus pour la fixation dans une paroi de faible épaisseur, notamment un panneau de construction, tel qu'une plaque de plâtre, y compris une plaque de plâtre renforcée par des fibres ou munie de voiles de fibres, en particulier de fibres de verre (glass mat) ; une plaque ciment ; un panneau en aggloméré ; un panneau en bois ; une brique creuse. De tels panneaux de construction peuvent être associés avec un panneau isolant, en particulier l'invention peut être mise en oeuvre pour la fixation dans un panneau composite formé, à titre d'exemple, par l'assemblage d'une plaque de plâtre et d'un panneau en polystyrène expansé, ou par l'assemblage d'une plaque de plâtre et d'un panneau de mousse polyuréthane.

Enfin, l'invention a pour objet l'utilisation d'une cheville telle que décrite ci-dessus pour la fixation dans un matériau plein, notamment du béton cellulaire.

Les caractéristiques et avantages de l'invention apparaîtront dans la description qui va suivre de plusieurs modes de réalisation d'une cheville selon l'invention, donnée uniquement à titre d'exemple et faite en se référant aux dessins annexés dans lesquels :
- la figure 1 est une vue de côté d'une cheville conforme à un premier mode de réalisation de l'invention, en configuration insérée mais pas encore immobilisée dans une paroi ;
- la figure 2 est une vue analogue à la figure 1 en configuration immobilisée de la cheville dans la paroi ;
- la figure 3 est une vue selon la flèche III de la figure 2 ;
- la figure 4 est une coupe selon la ligne IV-IV de la figure 1 ;
- la figure 5 est une coupe analogue à la figure 4 pour une cheville conforme à un deuxième mode de réalisation de l'invention ;
- la figure 6 est une coupe analogue à la figure 4 pour une cheville conforme à un troisième mode de réalisation de l'invention ;
- la figure 7 est une coupe analogue à la figure 4 pour une cheville conforme à un quatrième mode de réalisation de l'invention ;
- la figure 8 est une vue en perspective de la pièce métallique qui forme la partie taraudée et l'élément de perçage du corps de la cheville de la figure 7 ;
- la figure 9 est une vue en perspective avec coupe partielle de l'extrémité du corps de la cheville de la figure 7 opposée à la tête de la vis ;
- la figure 10 est une vue en perspective avec coupe partielle de l'extrémité de la partie d'expansion du corps de la cheville de la figure 7 opposée à la tête de la vis ;
- la figure 11 est une vue analogue à la figure 1 pour une cheville conforme à un cinquième mode de réalisation de l'invention, en configuration insérée mais pas encore immobilisée dans une paroi ;
- la figure 12 est une vue en perspective d'une équerre fixée sur la paroi au moyen de la cheville montrée sur la figure 11 ;
- la figure 13 est une vue en perspective de l'équerre en cours de fixation sur la paroi au moyen de deux chevilles telles que montrées sur la figure 11 ;
- la figure 14 est une vue selon la flèche XIV de la figure 13 ; et
- la figure 15 est une vue selon la flèche XV de la figure 13.

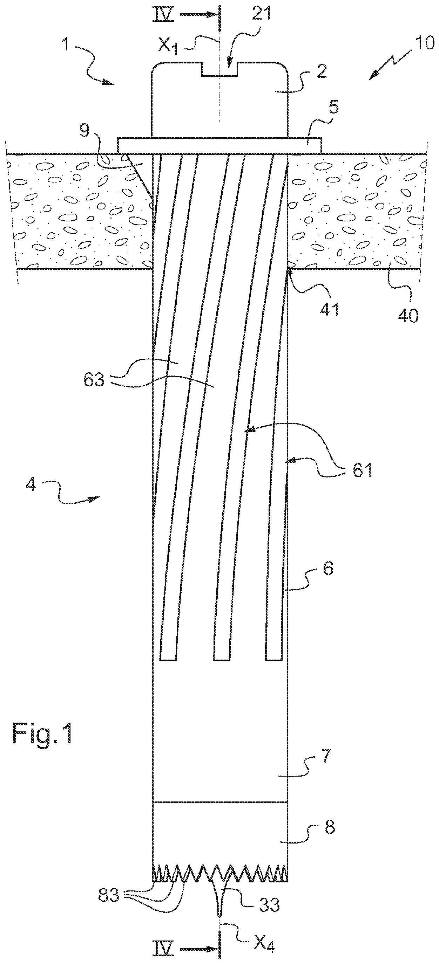

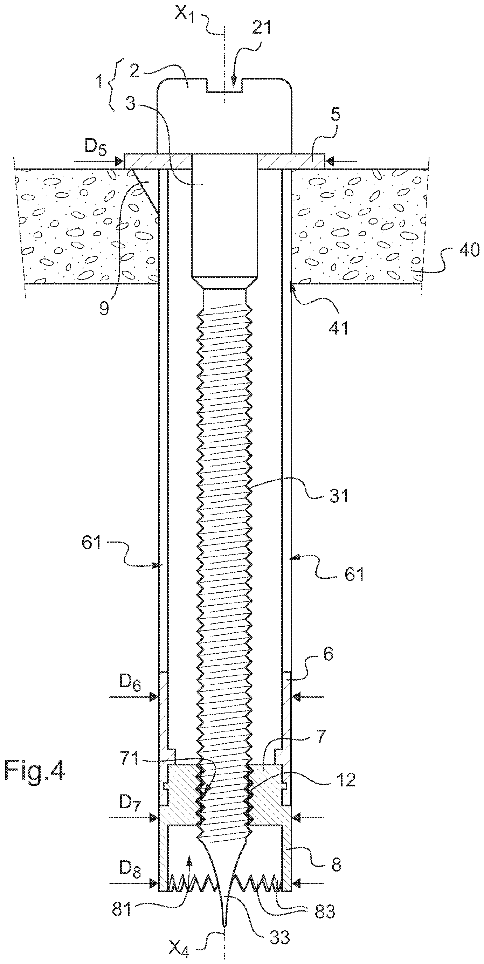

La cheville 10 visible sur les figures 1 à 4 est une cheville autoforeuse destinée à fixer une pièce, non représentée sur ces figures, sur une paroi support 40 de faible épaisseur. À titre d'exemple non limitatif, la paroi 40 est une plaque de plâtre.

La cheville 10 comprend une vis 1 et un corps de cheville 4. La vis 1, dont on note X₁ l'axe longitudinal, comporte une tête 2 et une tige 3 munie d'un filet 31. La tête 2 est pourvue, au niveau de sa face opposée à la tige 3, d'un logement 21 de réception d'un outil de vissage. Le corps de cheville 4 est de forme globalement tubulaire et comporte un alésage interne à section circulaire, centré sur un axe X₄, qui est apte à recevoir la tige 3 de la vis. Lorsque la tige 3 est reçue dans l'alésage du corps de cheville 4, les axes X₁ et X₄ sont confondus.

A son extrémité dirigée vers la tête 2 de la vis, le corps de cheville 4 comporte une collerette 5 de diamètre externe D₅, prévue pour venir en appui contre la paroi 40. La collerette 5 est reliée à une partie d'expansion 6 de diamètre externe D₆ inférieur à celui de la collerette. La collerette 5 et la partie d'expansion 6 sont constituées en un même matériau plastique. La paroi latérale de la partie d'expansion 6 est pourvue de fentes longitudinales 61, qui sont réparties circonférentiellement en étant inclinées par rapport à l'axe X₄. Les fentes 61 définissent entre elles des bandes 63 déformables plastiquement. Le corps de cheville 4 comporte également des ailettes 9 de blocage en rotation situées à la jonction entre la collerette 5 et le corps d'expansion 6.

À son autre extrémité, le corps de cheville 4 comporte un élément de perçage 8, qui se présente sous la forme d'une scie cloche. La scie cloche 8 comporte un alésage interne 81, permettant le libre passage de la tige 3 de la vis, et une série de dents 83 réparties circonférentiellement autour de l'alésage 81. De manière avantageuse, l'extrémité 33 de la tige 3 de la vis opposée à la tête 2 est effilée de manière à former un pointeau de centrage pour la scie cloche 8.

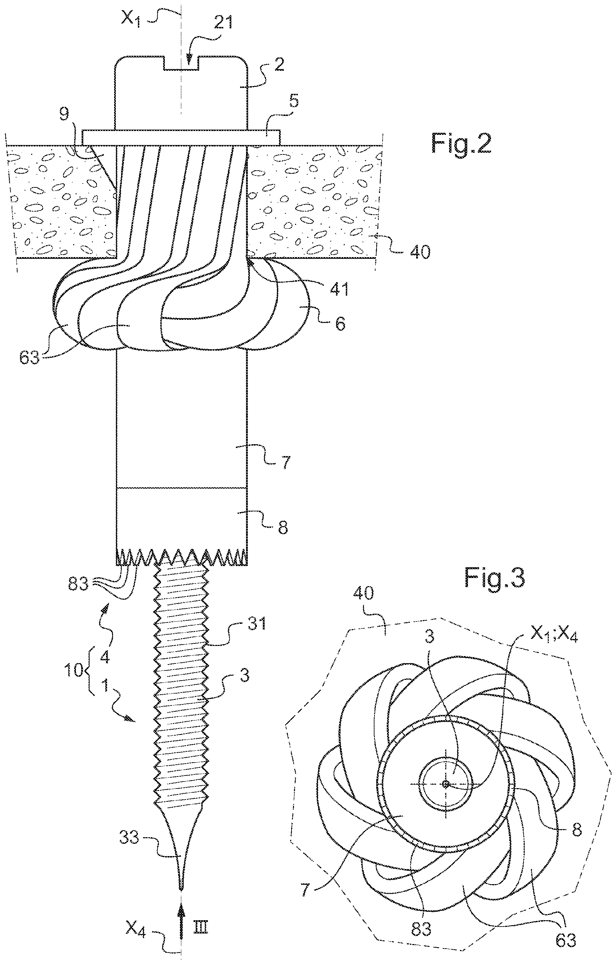

La scie cloche 8 et la partie d'expansion 6 sont reliées l'une à l'autre par une partie taraudée 7, les diamètres externes D₇ et D₈ de la partie taraudée 7 et de la scie cloche 8 étant sensiblement égaux à celui de la partie d'expansion 6. La partie taraudée 7 est munie d'un taraudage interne 71 propre à coopérer avec le filet 31 de la vis, de sorte qu'elle forme un écrou sur la tige 3 de la vis. Lorsque la tige 3 est vissée dans la partie taraudée 7, celle-ci avance en direction de la collerette 5 en déformant hélicoïdalement la partie d'expansion 6, comme montré sur les figures 2 et 3. A l'état déformé de la partie d'expansion 6, la cheville 10 est immobilisée par rapport à la paroi 40.

Dans ce premier mode de réalisation, la partie taraudée 7 et la scie cloche 8 sont monobloc et constituées en matériau métallique, notamment en acier. Le corps de cheville 4 est avantageusement fabriqué par moulage par injection du matériau plastique constitutif de la collerette 5 et de la partie d'expansion 6 autour de la pièce métallique formée par la partie taraudée 7 et la scie cloche 8. Conformément à l'invention, la vis 1 et le corps de cheville 4 sont solidarisés l'un avec l'autre par une couche de colle 12 interposée entre le taraudage 71 de la partie taraudée 7 et le filet 31 de la vis, cette couche de colle 12 étant adaptée pour rompre lors du dépassement d'un couple prédéterminé C₀.

La mise en place de la cheville 10 dans la paroi 40 s'opère en entraînant la vis 1 en rotation dans le sens classique de vissage, par action d'un outil dans le logement 21 prévu à cet effet dans la tête 2 de la vis. Dans un premier temps, le couple appliqué entre la vis 1 et le corps de cheville 4 est inférieur au couple prédéterminé C₀, de sorte que la vis et le corps de cheville sont liés cinématiquement l'un à l'autre par la couche de colle 12. Par mise en rotation de la vis 1, on obtient alors une rotation de la scie cloche 8 et, en mettant en contact la scie cloche 8 avec la paroi 40, on perce un trou 41 dans la paroi tout en y insérant le corps de cheville 4. Lorsque la collerette 5 vient en appui contre la paroi 40, les ailettes 9 de blocage en rotation sont en prise dans le matériau de la paroi 40, de sorte que le corps de cheville 4 est immobilisé en rotation par rapport à la paroi. La vis 1 et le corps de cheville 4 restent solidaires jusqu'à ce qu'un couple supérieur ou égal au couple prédéterminé C₀ soit atteint. En continuant d'entraîner la vis 1 en rotation et donc d'augmenter le couple, la vis 1 se désolidarise du corps de cheville 4, ce qui provoque le vissage de la vis dans la partie taraudée 7 et l'avancée de la partie taraudée 7 en direction de la collerette 5. Il en résulte une déformation de la partie d'expansion 6, ce qui verrouille le corps de cheville 4 dans le trou 41 de la paroi.

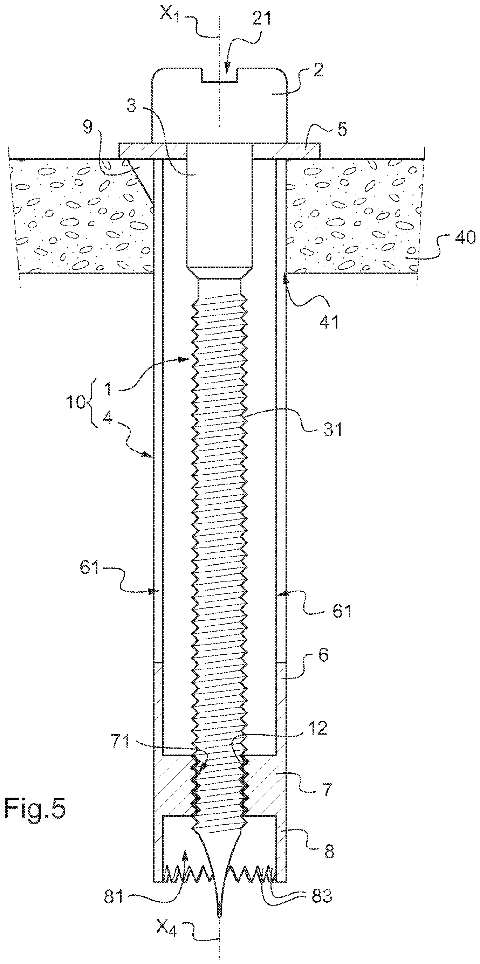

Dans le deuxième mode de réalisation représenté sur la figure 5, les éléments analogues à ceux du premier mode de réalisation portent des références identiques. La cheville 10 représentée sur la figure 5 diffère de celle du premier mode de réalisation en ce que l'ensemble du corps de cheville 4 est en matériau plastique, y compris la partie taraudée 7 et la scie cloche 8. Le corps de cheville 4 est alors avantageusement fabriqué en une seule pièce, par moulage par injection. De préférence, la partie taraudée 7 et la scie cloche 8 sont constituées en un même matériau plastique plus rigide que le matériau plastique constitutif de la collerette 5 et de la partie d'expansion 6.

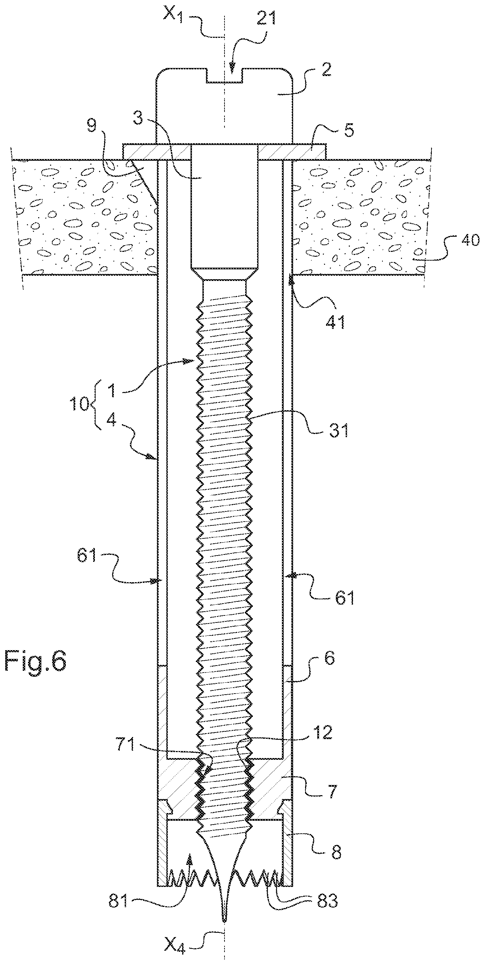

Dans le troisième mode de réalisation représenté sur la figure 6, les éléments analogues à ceux du premier mode de réalisation portent des références identiques. La cheville 10 représentée sur la figure 6 diffère de celle du premier mode de réalisation en ce que la partie taraudée 7 est constituée en matériau plastique, alors que la scie cloche 8 reste en matériau métallique. De préférence, la partie taraudée 7 est constituée en un matériau plastique plus rigide que le matériau plastique constitutif de la collerette 5 et de la partie d'expansion 6. Comme dans le premier mode de réalisation, le corps de cheville 4 est avantageusement fabriqué par moulage par injection des matériaux plastiques constitutifs de la collerette 5, la partie d'expansion 6 et la partie taraudée 7 autour de la pièce métallique formée par la scie cloche 8.

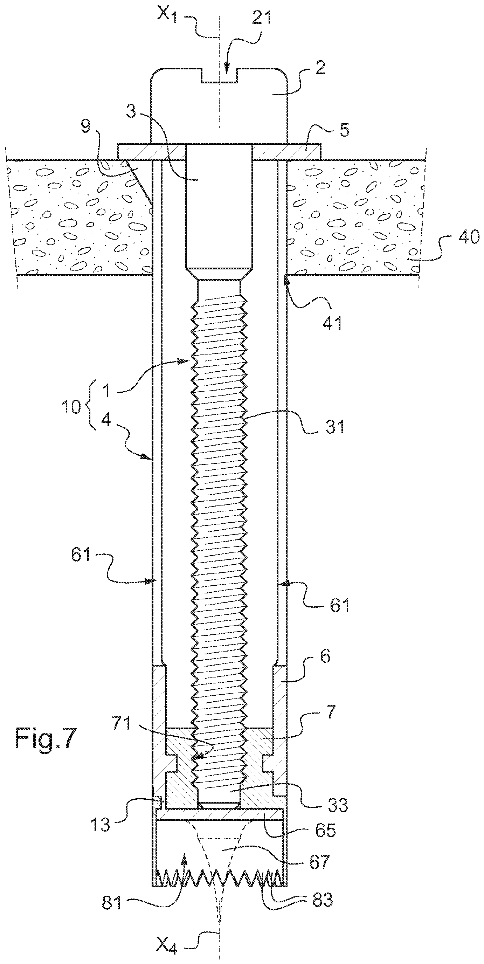

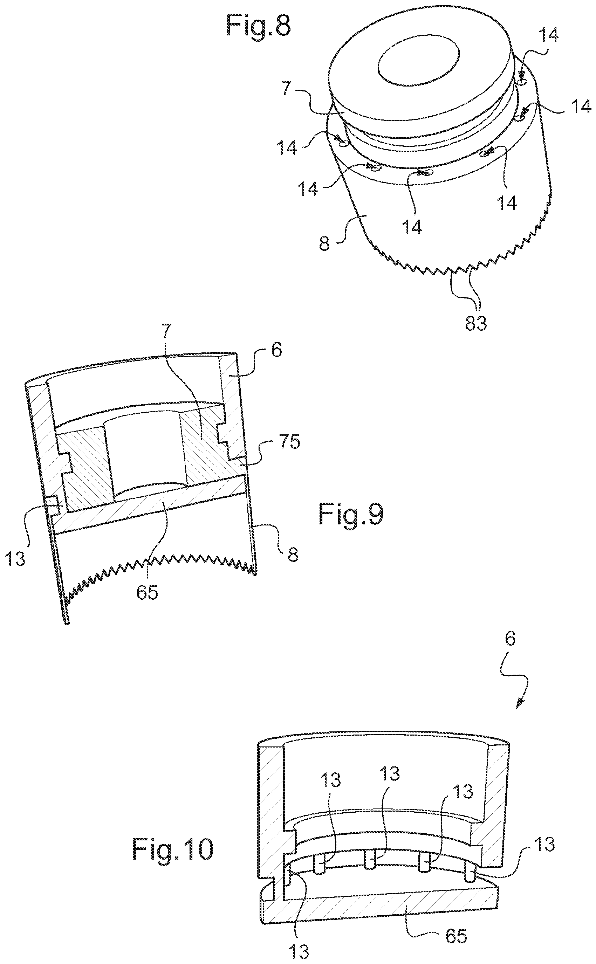

Dans le quatrième mode de réalisation représenté sur les figures 7 à 10, les éléments analogues à ceux du premier mode de réalisation portent des références identiques. La cheville 10 représentée sur la figure 7 diffère de celle du premier mode de réalisation en ce que les moyens de solidarisation détachables entre la vis 1 et le corps de cheville 4 ne sont plus formés par une couche de colle 12, mais par des pattes sécables 13. Comme visible sur les figures 7 à 10, la partie taraudée 7 et la scie cloche 8 sont formées par une seule pièce en matériau métallique, la collerette 5 et la partie d'expansion 6 étant obtenues par moulage par injection d'un matériau plastique autour de cette pièce métallique. Lors du moulage par injection, le matériau plastique constitutif de la collerette 5 et de la partie d'expansion 6 passe dans des trous 14 de la pièce métallique. Cela forme les pattes sécables 13, ainsi qu'une plateforme 65 positionnée en appui contre un épaulement 75 de la pièce métallique situé à la jonction entre la partie taraudée 7 et l'élément de perçage 8. La plateforme 65 reçoit en butée l'extrémité 33 de la tige 3 de la vis opposée à la tête 2, de sorte que la vis 1 et le corps de cheville 4 sont solidarisés l'un avec l'autre. Les pattes sécables 13 sont adaptées pour rompre lors du dépassement du couple prédéterminé C₀, de manière à détacher la plateforme 65 par rapport au reste de la partie d'expansion 6 et à rendre possible un vissage de la vis 1 dans le taraudage 71 de la partie taraudée 7 et ainsi la déformation de la partie d'expansion 6. Dans ce mode de réalisation, comme l'extrémité 33 de la vis est en butée contre la plateforme 65, elle ne peut pas être utilisée comme élément de centrage lors du perçage de la paroi 40 avec la scie cloche 8. Un pointeau 67 en matériau plastique, monobloc avec la plateforme 65 et en saillie par rapport à celle-ci à l'opposé de l'extrémité 33 de la vis, peut alors être formé lors du moulage par injection.

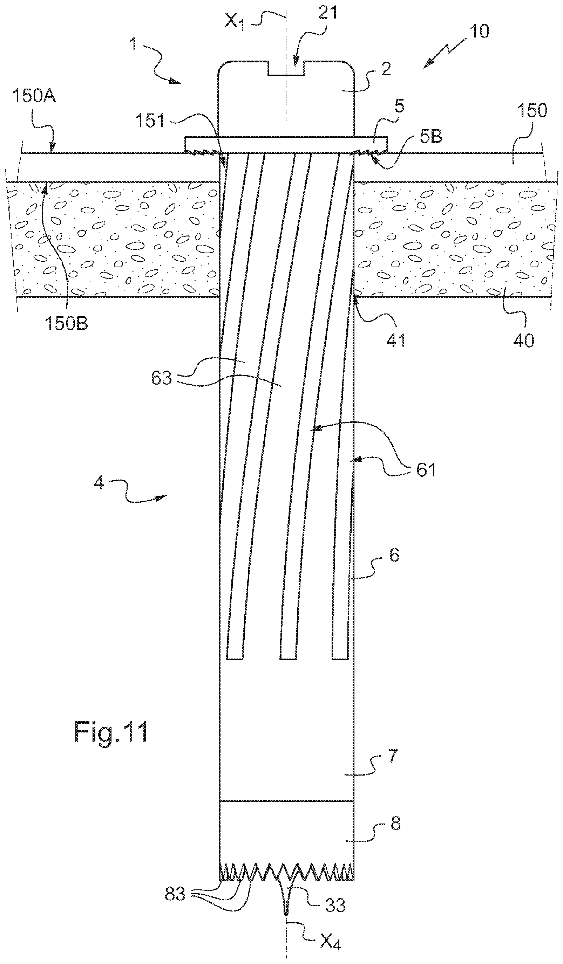

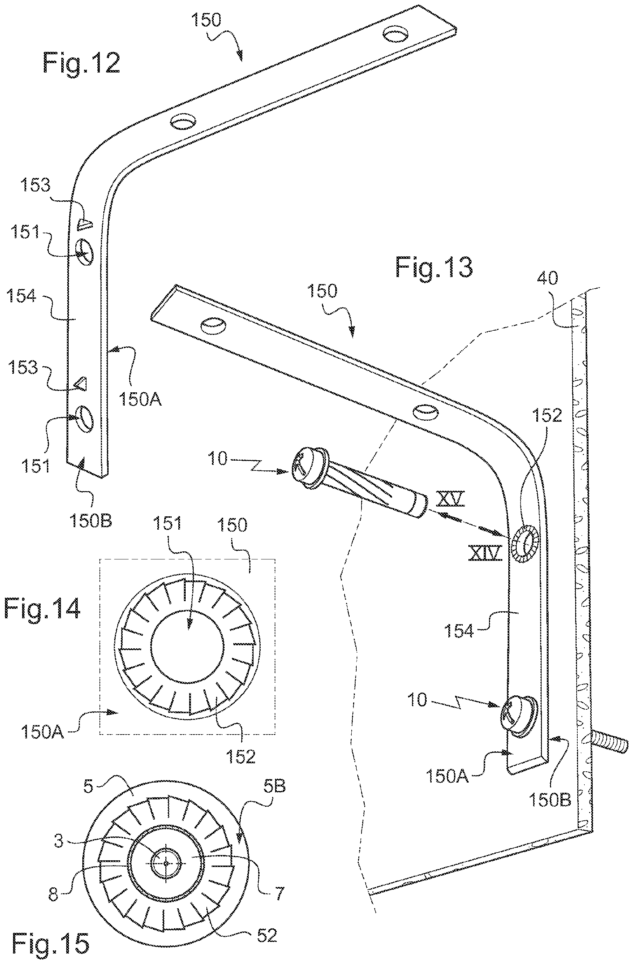

Dans le cinquième mode de réalisation représenté sur les figures 11 à 15, les éléments analogues à ceux du premier mode de réalisation portent des références identiques. La cheville 10 représentée sur la figure 11 diffère de celle du premier mode de réalisation en ce que les moyens de blocage en rotation du corps de cheville 4 par rapport à la paroi 40 ne sont pas des ailettes 9 d'ancrage dans le matériau de la paroi, mais des motifs en relief 52 prévus sur la face 5B de la collerette 5 dirigée à l'opposé de la tête 2 de la vis, qui sont aptes à coopérer avec des motifs en relief 152 complémentaires, prévus sur une pièce 150 à fixer sur la paroi. Dans l'exemple représenté sur les figures 11 à 15, la pièce à fixer sur la paroi 40 est une équerre 150, dont une branche 154 est destinée à venir en appui contre la paroi. La branche 154 de l'équerre 150 comprend deux orifices 151, les motifs 152 de blocage en rotation étant prévus autour de chaque orifice 151 sur une face 150A de la branche 154 destinée à être en regard de la face 5B de la collerette 5. De manière avantageuse, la branche 154 comporte, sur sa face 150B d'appui contre la paroi 40, des picots 153 d'immobilisation provisoire de l'équerre par rapport à la paroi 40. Les orifices 151 peuvent alors être utilisés comme éléments de centrage lors du perçage de la paroi 40 avec la scie cloche 8. Dans ce cas, il n'est pas nécessaire que l'extrémité 33 de la vis forme un pointeau.

L'invention n'est pas limitée aux exemples décrits et représentés. En particulier, une liaison sécable, notamment via des pattes sécables 13 comme précédemment, peut être mise en place dans le cas d'un corps de cheville 4 tout plastique, ou lorsque seul l'élément de perçage 8 est métallique. De plus, la solidarisation détachable entre la vis 1 et le corps de cheville 4 peut être obtenue par une liaison de précontrainte entre le filet de la vis et le taraudage de la partie taraudée, au lieu d'être obtenue au moyen d'une couche de colle ou de pattes sécables comme décrit dans les exemples précédents. L'élément de perçage peut également être de toute forme autre qu'une scie cloche, pour autant qu'il comporte un alésage interne permettant le libre passage de la tige de vis. Enfin, la partie d'expansion peut être différente de celle décrite et représentée, en particulier elle peut présenter des modes de déformation autres qu'une déformation hélicoïdale ; il peut s'agir notamment d'un corps d'expansion comportant une pluralité de pattes métalliques allongées, qui sont prévues pour plier et se rabattre contre la face arrière de la paroi en étant réparties en étoile.

## Revendications

1. Cheville (10) autoforeuse pour la fixation dans une paroi (40), comprenant :
une vis (1) ayant une tête (2) et une tige (3) munie d'un filet (31),
un corps de cheville (4) propre à recevoir la tige (3) de la vis,
le corps de cheville (4) comportant :
- une collerette (5) à son extrémité dirigée vers la tête (2) de la vis,
- une partie taraudée (7) apte à coopérer avec le filet (31) de la vis,
- une partie d'expansion (6) déformable entre la collerette (5) et la partie taraudée (7),
- des moyens (9 ; 52) de blocage en rotation du corps de cheville par rapport à la paroi (40),
la partie taraudée (7) étant apte à avancer en direction de la collerette (5), en déformant la partie d'expansion (6), lors du vissage de la vis dans la partie taraudée,
le corps de cheville (4) comportant en outre un élément de perçage (8) à son extrémité opposée à la collerette (5), **caractérisée en ce que** la cheville comprend des moyens (12 ; 13) de solidarisation entre la tige (3) de la vis (1) et le corps de cheville (4) qui sont détachables pour un couple (C), appliqué entre la vis et le corps de cheville, supérieur ou égal à un couple prédéterminé (C₀).

2. Cheville selon la revendication 1, **caractérisée en ce que** les moyens de solidarisation détachables (12 ; 13) sont actifs entre la vis (1) et le corps de cheville (4) indépendamment d'un effort de contact entre la tête (2) de la vis et la collerette (5) du corps de cheville.

3. Cheville selon l'une quelconque des revendications précédentes, **caractérisée en ce que** l'élément de perçage (8) comporte un alésage interne (81) adapté pour le passage de la tige (3) de la vis.

4. Cheville selon la revendication 3, **caractérisée en ce que** l'élément de perçage (8) comporte, à son extrémité opposée à la collerette (5), une pluralité de dents (83) réparties circonférentiellement autour de l'alésage (81), en particulier l'élément de perçage (8) est une scie cloche.

5. Cheville selon l'une quelconque des revendications précédentes, **caractérisée en ce que** l'extrémité (33) de la tige (3) de la vis opposée à la tête (2) forme un pointeau de centrage pour l'élément de perçage (8).

6. Cheville selon l'une quelconque des revendications précédentes, **caractérisée en ce que** les dimensions radiales (D₈) de l'élément de perçage (8) sont supérieures ou égales aux dimensions radiales (D₇, D₆) de la partie taraudée (7) et de la partie d'expansion (6) à l'état non déformé, et sont strictement inférieures aux dimensions radiales (D₅) de la collerette (5).

7. Cheville selon l'une quelconque des revendications précédentes, **caractérisée en ce que** la partie d'expansion (6) est en matériau plastique.

8. Cheville selon l'une quelconque des revendications précédentes, **caractérisée en ce que** l'élément de perçage (8) est en matériau métallique.

9. Cheville selon l'une quelconque des revendications précédentes, **caractérisée en ce que** la partie taraudée (7) est en matériau métallique.

10. Cheville selon l'une quelconque des revendications précédentes, **caractérisée en ce que** la partie taraudée (7) et l'élément de perçage (8) sont une seule pièce métallique.

11. Cheville selon l'une quelconque des revendications 8 à 10, **caractérisée en ce que** le corps de cheville (4) est obtenu par moulage par injection d'un matériau plastique autour de la ou chaque pièce métallique formée par la partie taraudée (7) et/ou l'élément de perçage (8).

12. Cheville selon l'une quelconque des revendications 1 à 7, **caractérisée en ce que** la partie d'expansion (6), la partie taraudée (7) et l'élément de perçage (8) sont en matériau plastique.

13. Cheville selon la revendication 12, **caractérisée en ce que** la partie taraudée (7) et l'élément de perçage (8) sont constitués en matériau plastique plus rigide que le matériau plastique de la partie d'expansion (6).

14. Cheville selon l'une quelconque des revendications 12 ou 13, **caractérisée en ce que** le corps de cheville (4) est obtenu par moulage par injection en une seule pièce.

15. Cheville selon l'une quelconque des revendications précédentes, **caractérisée en ce que** les moyens de solidarisation détachables comprennent une couche d'adhésif (12) entre la vis (1) et le corps de cheville (4) qui est adaptée pour rompre lors du dépassement du couple prédéterminé.

16. Cheville selon l'une quelconque des revendications 1 à 14, **caractérisée en ce que** les moyens de solidarisation détachables comprennent une liaison sécable (13) entre la vis (1) et le corps de cheville (4) qui est adaptée pour rompre lors du dépassement du couple prédéterminé.

17. Cheville selon l'une quelconque des revendications 1 à 14, **caractérisée en ce que** les moyens de solidarisation détachables comprennent une liaison de précontrainte entre la vis (1) et le corps de cheville (4) qui est adaptée pour rompre lors du dépassement du couple prédéterminé.

18. Cheville selon l'une quelconque des revendications précédentes, **caractérisée en ce que** les moyens de blocage en rotation du corps de cheville (4) par rapport à la paroi (40) comprennent au moins une ailette (9) d'ancrage dans la paroi (40) au voisinage de la collerette (5).

19. Cheville selon l'une quelconque des revendications précédentes, **caractérisée en ce que** la partie d'expansion (6) comporte une pluralité de fentes longitudinales (61), qui sont réparties circonférentiellement en étant inclinées par rapport à un axe longitudinal (X₄) de la partie d'expansion et qui définissent une pluralité de bandes (63) déformables hélicoïdalement lors du vissage de la vis (1) dans la partie taraudée (7).

20. Procédé de fabrication d'une cheville (10) selon l'une quelconque des revendications 8 à 10, dans lequel on place la ou chaque pièce métallique formée par la partie taraudée (7) et/ou l'élément de perçage (8) dans un moule et on injecte un matériau plastique dans le moule autour de la ou chaque pièce métallique.

21. Procédé de fabrication d'une cheville (10) selon l'une quelconque des revendications 12 ou 13, par injection d'un matériau plastique ou de plusieurs matériaux plastiques compatibles dans un moule.

22. Utilisation d'une cheville (10) selon l'une quelconque des revendications 1 à 19 pour la fixation dans une paroi (40) de faible épaisseur, notamment un panneau de construction, tel qu'une plaque de plâtre, une plaque ciment, un panneau en aggloméré, un panneau en bois, une brique creuse, un panneau composite formé par l'assemblage d'une plaque de plâtre et d'un panneau isolant en polystyrène expansé ou en mousse polyuréthane.

23. Utilisation d'une cheville (10) selon l'une quelconque des revendications 1 à 19 pour la fixation dans un matériau plein, tel que du béton cellulaire.

## Patentansprüche

1. Selbstbohrender Dübel (10) zur Befestigung in einer Wand (40), umfassend:
eine Schraube (1) mit einem Kopf (2) und einer mit einem Gewinde (31) versehenen Stange (3),
einen Dübelkörper (4), der dazu ausgelegt ist, die Stange (3) der Schraube aufzunehmen,
wobei der Dübelkörper (4) Folgendes umfasst:
- einen Flansch (5), der an seinem Ende in Richtung des Kopfes (2) der Schraube gerichtet ist,
- einen Gewindeabschnitt (7), der zum Zusammenwirken mit dem Gewinde (31) der Schraube geeignet ist,
- einen Spreizteil (6), der zwischen dem Flansch (5) und dem Gewindeabschnitt (7) verformbar ist,
- Mittel (9; 52) zum Feststellen des Dübelkörpers in Drehung bezogen auf die Wand (40), wobei der Gewindeabschnitt (7) geeignet ist, durch Verformen des Spreizteils (6) beim Einschrauben der Schraube in den Gewindeabschnitt in Richtung auf den Flansch (5) vorzurücken,
wobei der Dübelkörper (4) ferner an seinem dem Flansch (5) gegenüberliegenden Ende ein Einstechelement (8) aufweist, **dadurch gekennzeichnet, dass** der Dübel Mittel (12; 13) zum Verfestigen zwischen der Stange (3) der Schraube (1) und dem Dübelkörper (4) aufweist, die für ein zwischen der Schraube und dem Dübelkörper aufgebrachtes Drehmoment (C), größer oder gleich einem vorbestimmten Drehmoment (C₀) lösbar sind.

2. Dübel nach Anspruch 1, **dadurch gekennzeichnet, dass** die lösbaren Verfestigungsmittel (12; 13) zwischen der Schraube (1) und dem Dübelkörper (4) unabhängig von einer Kontaktkraft zwischen dem Kopf (2) der Schraube und dem Flansch (5) des Dübelkörpers wirksam sind.

3. Dübel nach einem beliebigen vorhergehednen Ansprüche, **dadurch gekennzeichnet, dass** das Durchstechelement (8) eine innere Bohrung (81) aufweist, die für den Durchgang der Stange (3) der Schraube angepasst ist.

4. Dübel nach Anspruch 3, **dadurch gekennzeichnet, dass** das Durchstechelement (8) an seinem dem Flansch (5) gegenüberliegenden Ende eine Vielzahl von Zähnen (83) aufweist, die in Umfangsrichtung um die Bohrung (81) verteilt sind und insbesondere das Durchstechelement (8) eine Lochsäge ist.

5. Dübel nach einem beliebigen der vorhergehenden Ansprüche, **dadurch gekennzeichnet, dass** das dem Kopf (2) gegenüberliegende Ende (33) der Stange (3) der Schraube einen Zentrierstift für das Durchstechelement (8) bildet.

6. Dübel nach einem beliebigen der vorhergehenden Ansprüche, **dadurch gekennzeichnet, dass** die radialen Abmessungen (D₈) des Durchstechelements (8) größer oder gleich den radialen Abmessungen (D₇, D₆) des Gewindeabschnitts (7) und des Spreizteils (6) im unverformten Zustand sind und streng kleiner als die radialen Abmessungen (D₅) des Flansches (5) sind.

7. Dübel nach einem beliebigen der vorhergehenden Ansprüche, **dadurch gekennzeichnet, dass** der Spreizteil (6) aus Kunststoff besteht.

8. Dübel nach einem beliebigen der vorhergehenden Ansprüche, **dadurch gekennzeichnet, dass** das Durchstechelement (8) aus metallischem Material besteht.

9. Dübel nach einem beliebigen der vorhergehenden Ansprüche, **dadurch gekennzeichnet, dass** der Gewindeabschnitt (7) aus metallischem Material besteht.

10. Dübel nach einem der beliebigen vorhergehenden Ansprüche, **dadurch gekennzeichnet, dass** der Gewindeabschnitt (7) und das Durchstechelement (8) einstückig metallisch sind.

11. Dübel nach einem beliebigen der Ansprüche 8 bis 10, **dadurch gekennzeichnet, dass** der Dübelkörper (4) durch Spritzgießen eines Kunststoffmaterials um den oder jeden Metallteil, der durch den Gewindeabschnitt (7) gebildet ist, und/oder das Durchstechelement (8) erhalten wird.

12. Dübel nach einem beliebigen der Ansprüche 1 bis 7, **dadurch gekennzeichnet, dass** der Spreizteil (6), der Gewindeabschnitt (7) und das Durchstechelement (8) aus Kunststoff bestehen.

13. Dübel nach Anspruch 12, **dadurch gekennzeichnet, dass** der Gewindeabschnitt (7) und das Durchstechelement (8) aus Kunststoffmaterial bestehen, das steifer ist als das Kunststoffmaterial des Spreizteils (6).

14. Dübel nach einem beliebigen der Ansprüche 12 oder 13, **dadurch gekennzeichnet, dass** der Dübelkörper (4) einstückig durch Spritzgießen erhalten wird.

15. Dübel nach einem beliebigen der vorhergehenden Ansprüche, **dadurch gekennzeichnet, dass** die lösbaren Verfestigungsmittel eine Klebeschicht (12) zwischen der Schraube (1) und dem Dübelkörper (4) umfassen, die angepasst ist, um beim Überschreiten des vorbestimmten Drehmoments zu brechen.

16. Dübel nach einem beliebigen der Ansprüche 1 bis 14, **dadurch gekennzeichnet, dass** die lösbaren Verfestigungsmittel eine trennbare Verbindung (13) zwischen der Schraube (1) und dem Dübelkörper (4) umfassen, die angepasst ist, um beim Überschreiten des vorbestimmten Drehmoments zu brechen.

17. Dübel nach einem beliebigen der Ansprüche 1 bis 14, **dadurch gekennzeichnet, dass** die lösbaren Verfestigungsmittel eine vorgespannte Verbindung zwischen der Schraube (1) und dem Dübelkörper (4) umfassen, die angepasst ist, um beim Überschreiten des vorbestimmten Drehmoments zu brechen.

18. Dübel nach einem beliebigen der vorhergehenden Ansprüche, **dadurch gekennzeichnet, dass** die Mittel zum Feststellen des Dübelkörpers (4) in Drehung bezogen auf die Wand (40) mindestens eine Rippe (9) zum Verankern in der Wand (40) in der Nähe des Flansches (5) umfassen.

19. Dübel nach einem beliebigen der vorhergehenden Ansprüche, **dadurch gekennzeichnet, dass** der Spreizteil (6) eine Vielzahl von Längsschlitzen (61) aufweist, die umfänglich verteilt sind, indem sie bezogen auf eine Längsachse (X₄) des Spreizteils geneigt sind, und die eine Vielzahl von Streifen (63) definieren, die während des Einschraubens der Schraube (1) in den Gewindeabschnitt (7) schraubenförmig verformbar sind.

20. Verfahren zur Herstellung eines Dübels (10) nach einem beliebigen der Ansprüche 8 bis 10, wobei der oder jeder Metallteil, der durch den Gewindeabschnitt (7) und/oder das Durchstechelement (8) gebildet wird, in einer Form angeordnet und ein Kunststoffmaterial in die Form um den oder jeden Metallteil eingespritzt wird.

21. Verfahren zur Herstellung eines Dübels (10) nach einem beliebigen der Ansprüche 12 oder 13 durch Einspritzen eines Kunststoffmaterials oder mehreren kompatiblen Kunststoffmaterialien in eine Form.

22. Verwendung eines Dübels (10) nach einem beliebigen der Ansprüche 1 bis 19 zur Befestigung in einer Wand (40) geringer Dicke, insbesondere einer Bauplatte, wie einer Gipskartonplatte, einer Zementplatte, einer Spanplatte, einer Holzplatte, einem Hohlziegel, einer Verbundplatte, die durch Zusammenfügen einer Gipsplatte und einer Isolierplatte aus expandiertem Polystyrol oder Polyurethanschaum gebildet wird.

23. Verwendung eines Dübels (10) nach einem beliebigen der Ansprüche 1 bis 19 zur Befestigung in einem Vollmaterial wie beispielsweise Porenbeton.

## Claims

1. A self-drilling anchor (10) for fixing in a wall (40), comprising:
a screw (1) having a head (2) and a shank (3) bearing a thread (31),
an anchor body (4) designed to receive the shank (3) of the screw,
wherein the anchor body (4) comprises:
- a flange (5) at that end of the anchor body oriented toward the head (2) of the screw,
- a threaded portion (7) designed to engage with the thread (31) of the screw,
- a deformable expansion portion (6) between the flange (5) and the threaded portion (7),
- rotation locking means (9; 52) for preventing rotation of the anchor body relative to the wall (40),
the threaded portion (7) being designed to advance in the direction of the flange (5), by deforming the expansion portion (6), when the screw is screwed into the threaded portion,
**characterized in that** the anchor body (4) further comprises a piercing element (8) at its opposite end from the flange (5), the anchor comprising fastening means (12; 13) between the shank (3) of the screw (1) and the anchor body (4), wherein these fastening means are detachable for a torque (T), applied between the screw and the anchor body, equal to or greater than a predetermined torque (T₀).

2. The anchor as claimed in claim 1, **characterized in that** the detachable fastening means (12; 13) are active between the screw (1) and the anchor body (4) independently of a contact force between the head (2) of the screw and the flange (5) of the anchor body.

3. The anchor as claimed in any one of the preceding claims, **characterized in that** the piercing element (8) comprises an internal bore (81) designed for the shank (3) of the screw to pass through.

4. The anchor as claimed in claim 3, **characterized in that** the piercing element (8) comprises, at its opposite end from the flange (5), a plurality of teeth (83) distributed circumferentially around the bore (81), in particular the piercing element (8) is a hole saw.

5. The anchor as claimed in any one of the preceding claims, **characterized in that** the opposite end (33) of the shank (3) of the screw from the head (2) forms a center punch for the piercing element (8).

6. The anchor as claimed in any one of the preceding claims, **characterized in that** the radial dimensions (D₈) of the piercing element (8) are equal to or greater than the radial dimensions (D₇, D₆) of the threaded portion (7) and of the expansion portion (6) in the non-deformed state, and are strictly smaller than the radial dimensions (D₅) of the flange (5).

7. The anchor as claimed in any one of the preceding claims, **characterized in that** the expansion portion (6) is made of plastic.

8. The anchor as claimed in any one of the preceding claims, **characterized in that** the piercing element (8) is made of metal.

9. The anchor as claimed in any one of the preceding claims, **characterized in that** the threaded portion (7) is made of metal.

10. The anchor as claimed in any one of the preceding claims, **characterized in that** the threaded portion (7) and the piercing element (8) are a single metal part.

11. The anchor as claimed in any one of claims 8 to 10, **characterized in that** the anchor body (4) is obtained by injection molding a plastic material around the or each metal part formed by the threaded portion (7) and/or the piercing element (8).

12. The anchor as claimed in any one of claims 1 to 7, **characterized in that** the expansion portion (6), the threaded portion (7) and the piercing element (8) are made of plastic.

13. The anchor as claimed in claim 12, **characterized in that** the threaded portion (7) and the piercing element (8) are made of a plastic material which is more rigid than the plastic material of the expansion portion (6).

14. The anchor as claimed in either of claims 12 and 13, **characterized in that** the anchor body (4) is obtained by injection molding in a single part.

15. The anchor as claimed in any one of the preceding claims, **characterized in that** the detachable fastening means comprise a layer of adhesive (12) between the screw (1) and the anchor body (4) which is designed to break when the predetermined torque is exceeded.

16. The anchor as claimed in any one of claims 1 to 14, **characterized in that** the detachable fastening means comprise a frangible connection (13) between the screw (1) and the anchor body (4) which is designed to break when the predetermined torque is exceeded.

17. The anchor as claimed in any one of claims 1 to 14, **characterized in that** the detachable fastening means comprise a prestress connection between the screw (1) and the anchor body (4) which is designed to break when the predetermined torque is exceeded.

18. The anchor as claimed in any one of the preceding claims, **characterized in that** the rotation locking means for preventing rotation of the anchor body (4) relative to the wall (40) comprise at least one fin (9) for anchoring in the wall (40) near the flange (5).

19. The anchor as claimed in any one of the preceding claims, **characterized in that** the expansion portion (6) comprises a plurality of longitudinal slits (61) which are distributed circumferentially and are inclined relative to a longitudinal axis (X₄) of the expansion portion, which define a plurality of strips (63) which are helically deformable when the screw (1) is screwed into the threaded portion (7).

20. A method for manufacturing an anchor (10) as claimed in any one of claims 8 to 10, wherein the or each metal part formed by the threaded portion (7) and/or the piercing element (8) is placed in a mold and a plastic material is injected into the mold around the or each metal part.

21. A method for manufacturing an anchor (10) as claimed in either of claims 12 and 13, by injecting a plastic material or several compatible plastic materials in a mold.

22. The use of an anchor (10) as claimed in any one of claims 1 to 19 for fixing in a thin wall (40), in particular a construction panel, such as a plasterboard, a cement board, a chipboard, a wooden panel, a hollow clay block, a composite panel formed by assembling a plasterboard panel and an insulating panel made of expanded polystyrene or polyurethane foam.

23. The use of an anchor (10) as claimed in any one of claims 1 to 19 for fixing in a solid material, such as cellular concrete.
